# EUROPEAN PATENT APPLICATION

(11) **EP 4 465 462 A1**
(43) Date of publication of application: **20.11.2024**
(21) Application number: 24168688.0
(22) Date of filing: 05.04.2024
(51) Int. Cl.: H02G 1/10, H02G 9/02, H01R 3/08, H02J 3/36

(54) **SUBMARINE SUPPORT FRAME FOR A SEA ELECTRODE**

(30) Priority: 18.05.2023 IT 202300010116
(71) Applicant: Futura S.p.A., 61020 Belforte All'Isauro (PU) (IT); Roda S.p.A., 25026 Pontevico (BS) (IT)
(72) Inventor: ABBRUZZESE, Domenico, 61020 Belforte All'isauro (PU) (IT); OCCHI, Franco, 16145 Genova (IT)
(74) Representative: Baldi, Claudio

(57) **Abstract**

A submarine support frame (100) for supporting a sea electrode (E); the submarine support frame (100) comprises a reticular structure (101) comprising bars (1, 2, 3) and connectors (4, 5) for connecting the bars (1, 2, 3) to each other; the reticular structure (101) defines a housing (A) wherein the sea electrode (E) is arranged; the bars (1, 2, 3) and the connectors (4, 5) are made of polyethylene.

## Description

The present patent application for industrial invention relates to a submarine support frame for a sea electrode.

The field of reference is that of sea electrodes, i.e. the field of marine high-voltage direct current transmission circuits (which are internationally identified by the acronym HVDC - High Voltage Direct Current) that enable the transmission of electrical energy between two points separated by a water surface (such as a sea or an ocean).

As it is well known, HVDC transmission circuits use sea electrodes of known type, which are placed on the bottom of the sea or of the ocean to act as anodes or cathodes.

A monopolar HVDC system comprises a sea electrode acting as cathode, a sea electrode acting as anode, and a cable that closes the circuit. In such a case, water acts as electrical conductor between them, closing the circuit.

Instead, a bipolar HVDC system comprises two cables that connect the two electrodes, limiting the current that is dispersed in the water, which corresponds to the current difference between the two cables. In such a case, the two electrodes can continuously change polarities due to balance between the two cables and therefore they can act as anode and cathode of the high-voltage direct current transmission circuit.

Recently, such sea electrodes have undergone a technological evolution that has increased their efficiency by changing their construction type. There has been a shift from electrodes consisting of titanium rods to electrodes consisting of titanium grids with a specific surface treatment.

Said electrodes have a surface area of several tens of square meters and must be immersed horizontally at about 1.5 meters from the bottom of the sea, being supported by special stiffening and protection frames.

Because of the salts dissolved in seawater, the flow of electric current passing through the sea electrode activates electrolytic-type processes that create an acidic environment that is not compatible with metallic materials, which would undergo degradation.

In order to avoid such drawbacks, the applications developed so far have resorted to support frames made up of grid structures, consisting of fiberglass (GFRP) bars connected together.

Although such fiberglass structures are chemically resistant and therefore they are not subject to electrolytic degradation, they are still impaired by some drawbacks.

Such drawbacks arise from the fact that the fiberglass bars of the structure are assembled by means of titanium bolts coupled to flanges of the bars. In addition to being difficult to find and rather expensive, titanium bolts are subject to slow electrolytic degradation and therefore such structures require inspections and maintenance operations on a periodical basis.

In addition, the assembly of the bars with the bolts is a very time-consuming operation and therefore unfavorable for any emergency interventions in case of failure.

In addition, the fiberglass structures are characterized by stiffness and poor ductility such that any accidental impacts, which may be caused by boats or other vessels either during the installation or the operation, may generate cracks or failures that require repairs or replacements.

CN107148931 describes a polyethylene aquaculture frame.

Marzinotto Massimo et al: "on the measurement electrodes for HVDC Transmission" 2020 INTERNATIONAL SYMPOSIUM ON ELECTROMAGNETIC COMPATIBILITY - EMC EUROPE, IEEE, describes a metal frame for a sea electrode.

Sutton Simon J. et al: Review of global HDC subsea cable project and the application of sea electrodes" INTERNATIONAL JOURNAL OF ELECTRICAL POWER & ENERGY SYSTEM, describes a sea electrode frame comprising plastic rods.

Anonymous: GENERAL GUIDELINES FOR HVDC ELECTRODE DESIGN WORKING GROUP describes a concrete frame for a sea electrode.

US6242688B1 describes a wooden cage for a sea electrode.

Molfino P. et al "On the material for reversible HVDC sea electrode: a comparison aimed at their correct selection" 1021 AEIT HVDC INTERNATIONAL CONFERENCE, IEEE, describes a sea electrode supported by a gravel layer.

The purpose of the present invention is to overcome the drawbacks of the prior art by devising a support frame for a sea electrode that has a high chemical resistance, is shock-resistant, is long-lasting and is simple and inexpensive to make.

Another purpose of the present invention is to devise such a support frame for a sea electrode that is versatile and easily adaptable to specific design requirements both in terms of electrode size and in terms of the deformability/ductility required for such a structure.

These purposes are achieved in accordance with the invention with the features listed in the attached independent claim 1.

Advantageous achievements appear from the dependent claims.

The support frame for a sea electrode according to the invention is defined by claim 1.

For explanatory clarity, the description of the support frame for a sea electrode according to the invention is continued with reference to the attached drawings, which are for illustrative and non-limiting purposes only, wherein:
Fig. 1 is a diagrammatic axonometric view of a submarine assembly according to the invention;
Fig. 2 is an exploded diagrammatic axonometric view of the assembly of Fig. 1;
Fig. 3 is an enlargement of the detail enclosed in circle L of Fig. 2;
Fig. 4 is the same as Fig. 3, except for it also illustrates the pipes that are connected to the reticular structure to which the sea electrode is suitable for being attached;
Fig. 5 is the same as Figs. 3 and 4, except for it also illustrates protection panels mounted onto the reticular structure; and
Fig. 6 is a diagrammatic view of an assembly according to the invention immersed in water.

With reference to the appended figures, a marine assembly according to the invention, which is comprehensively indicated with the reference letter "G", is described.

The marine assembly (G) comprises a sea electrode (E) of a long-distance power line and a submarine support frame (100) for supporting the sea electrode (E).

A long-distance power line is a marine high-voltage direct current circuit used to transmit power between two points separated by a sea, an ocean or a water surface.

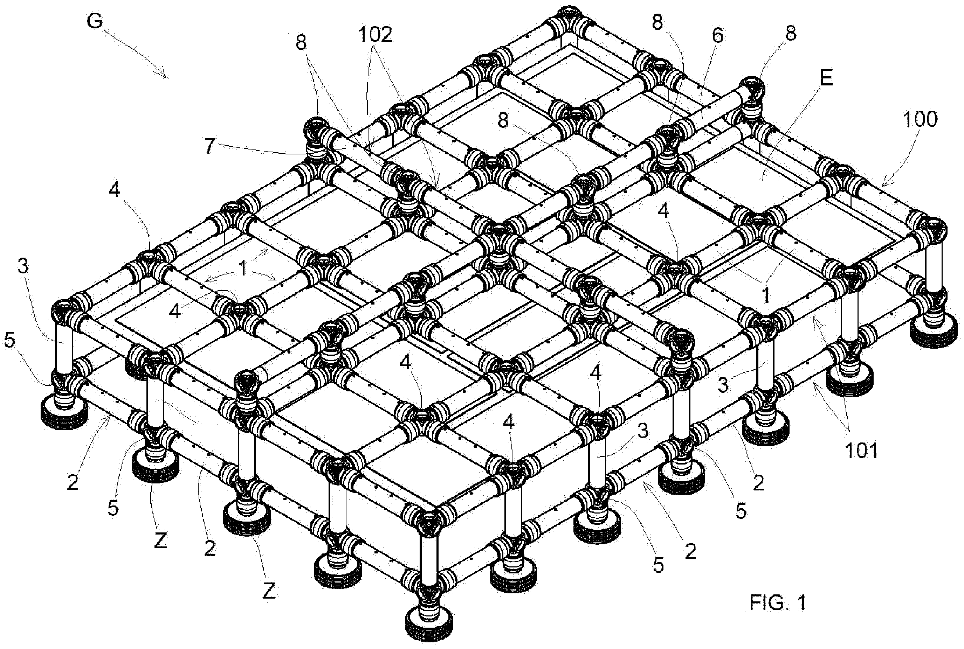

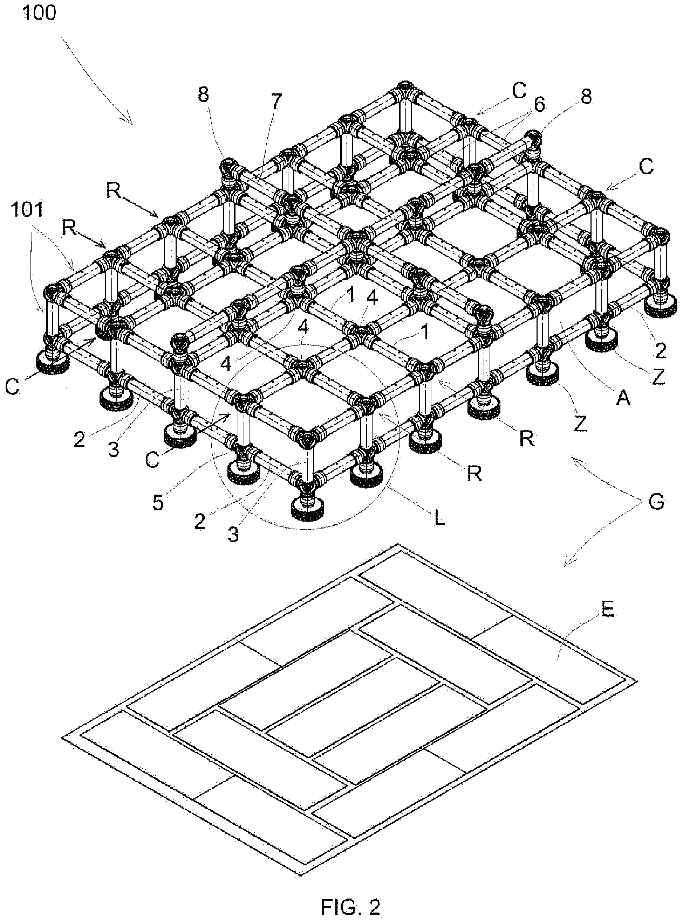

By way of example, the sea electrode (E), which is diagrammatically shown as a plate in Figs. 1 and 2, may consist of a surface-treated titanium grid or of other structures acting as a sea electrode, which are known to an expert of the field.

Referring to Figs. 1 and 2, the submarine support frame (100) comprises a reticular structure (101) comprising bars (1, 2, 3) and connectors (4, 5), which are also technically known as "nodes", that connect the bars (1, 2, 3). The reticular structure (101) is a substantially cage-like structure that internally defines a housing (A) wherein the sea electrode (E) is placed in such a way that the reticular structure (101) acts as a support and protection for the sea electrode (E).

The bars (1, 2, 3) and the connectors (4, 5) of the reticular structure (101) are all made of polyethylene, particularly of high-density polyethylene.

The reticular structure (101) has a parallelepiped shape and comprises:
- a plurality of upper bars (1) lying on the same upper horizontal plane;
- a plurality of upper connectors (4) that connect the upper bars (1) to each other;
- a plurality of lower bars (2) lying on the same lower horizontal plane;
- a plurality of lower connectors (5) connecting the lower bars (2) to each other;
- a plurality of uprights (3), each one of them being connected to an upper connector (4) and to a lower connector (5) aligned and disposed one above the other.

The upper bars (1) is arranged along rows (R) and columns (C) orthogonal to each other in such a way as to superiorly defined a grid, whereas the lower bars (2) are arranged along the perimeter of the reticular structure (101) in such a way as to define a lower opening for access to the housing (A) defined by the reticular structure (101).

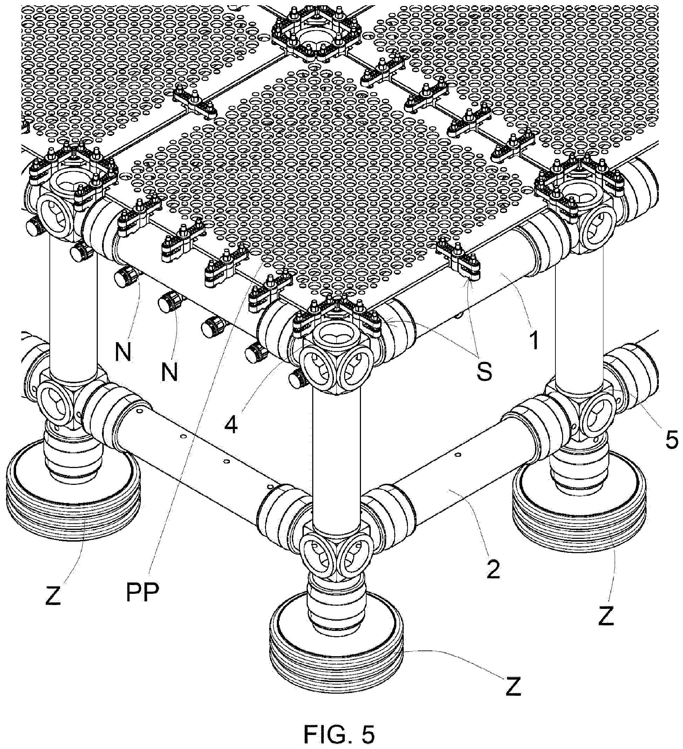

Protection panels (PP) (shown in Fig. 5) are suitable for being mounted onto the grid composed of the upper bars (1) arranged along rows (R) and columns (C) to protect the sea electrode (E) from anchors or other objects that may fall onto the bottom (F) of the sea or of the ocean.

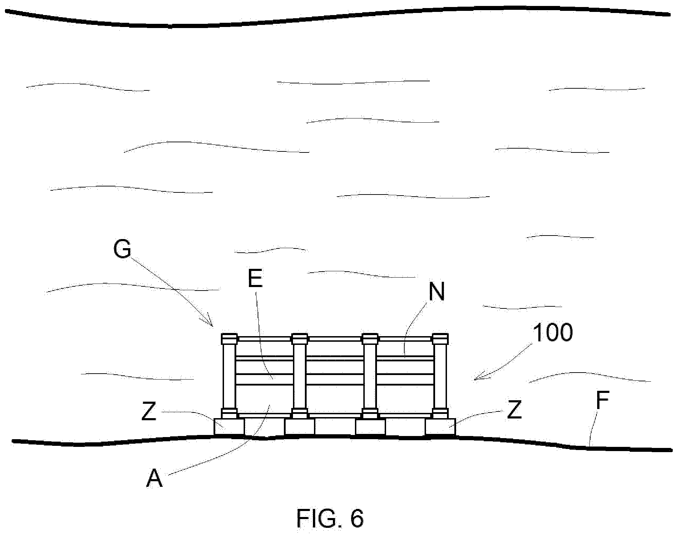

Ballasts (Z) are attached onto the lower connectors (5) and/or onto the lower bars (2) to keep the entire support frame (100) fixed on the bottom (F) of the sea or of the ocean, as shown schematically in Fig. 6.

Referring to Figs. 1 and 2, the submarine support frame (100) further comprises an additional structure (102) that is superiorly connected to the reticular structure (101). The additional structure (102) shown in the attached figures is in the shape of a cross and comprises a row of first horizontal bars (6) oriented in parallel direction to the columns (C) whereon the upper bars (1) are oriented, a row of second horizontal bars (7) oriented in parallel direction to the rows (R) whereon the upper bars (1) are oriented, and connectors (8) connecting said horizontal bars of the additional structure (102).

The additional structure (102) acts as a stiffening element to limit the deformation within limits compatible with the sea electrode (E).

The bars (6, 7) and the connectors (8) of the additional structure (102) are made of polyethylene, particularly of high-density polyethylene.

The additional structure (102) is connected to the underlying reticular structure (101) by connecting the connectors (8) of the additional structure (102) with the underlying upper connectors (4) of the reticular structure (101). The connectors (8) can be connected either directly to the upper connectors (4) or indirectly by means of spacer bars or high-density polyethylene sleeves.

Each connector (4, 5, 8) of the reticular structure (101) and of the additional structure (102) comprises at least three insertion mouths (B) to which one end (T1; T2) of one of the bars (1, 2, 3, 6, 7) is connected. Specifically, all connectors (4, 5, 8) have six insertion mouths (B) that are aligned two by two along three Cartesian axes. The insertion mouths (B) of each pair of mouths aligned along the same axis are faced in opposite directions.

Each bar (1, 2, 3, 6, 7) has ends (T1; T2) connected to respective connectors (4, 5, 8) by means of welding.

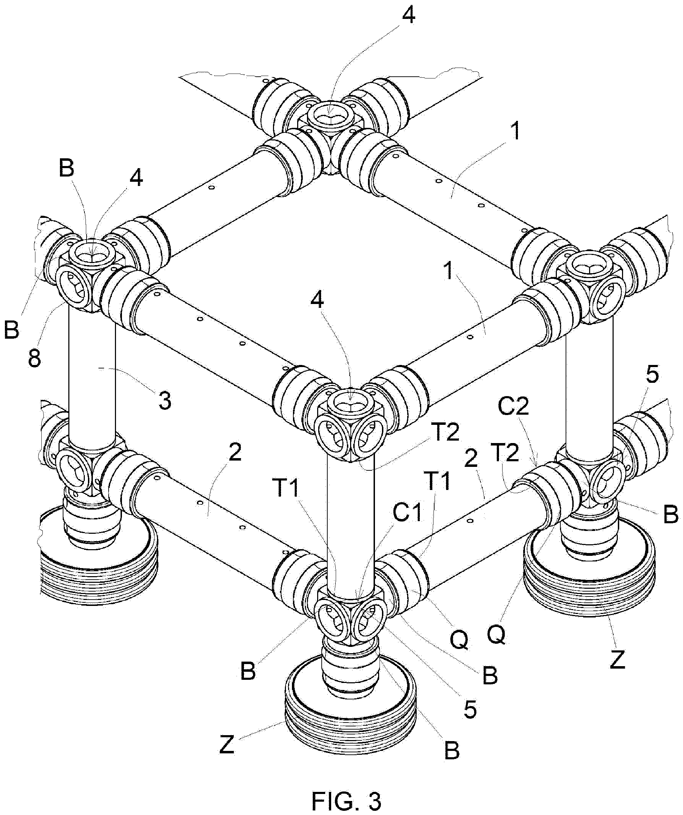

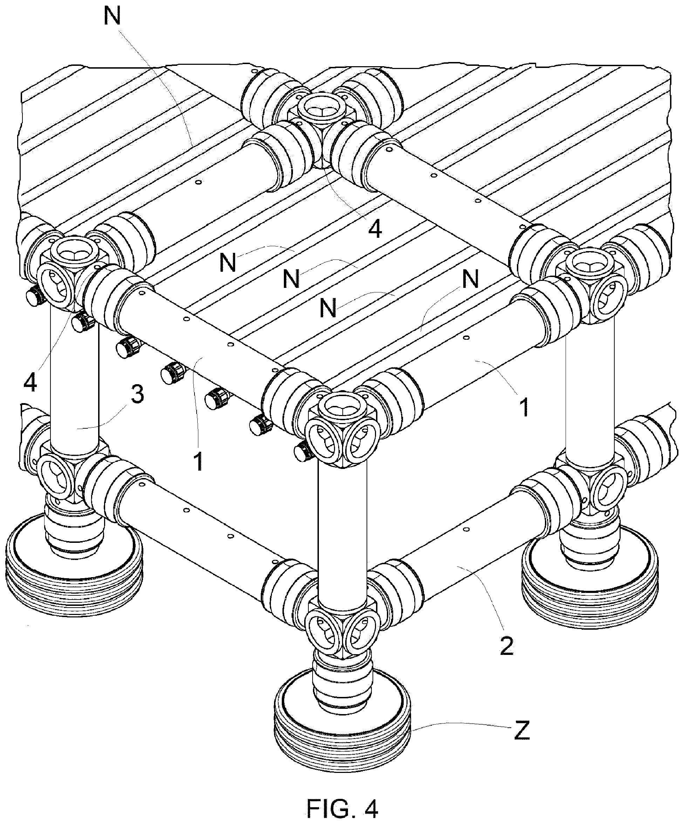

Referring to Figs. 3 and 4, in particular, each bar (1, 2, 3, 6, 7) has one of the ends (T1, T2) connected to the mouth (B) of the connector (4, 5, 8) by means of polyfusion butt welding (see the connection point indicated as "c1" in Fig. 3) or by means of a joining element, such as a sleeve (Q) wherein the end of the bar is inserted on one side and the mouth (B) is inserted on the other (see the connection area indicated with letter "c2" in Fig. 3).

The sleeve (Q) allows the bar (1, 2, 3, 6, 7) to be connected to the mouth by means of electric sleeve welding known to an expert of the field. The sleeve (Q) is made of polyethylene, and preferably of high-density polyethylene.

It should be noted that each mouth (B) may have a shorter or longer length depending on whether the mouth (B) is to be coupled with the end of the bar or whether it is to be inserted into the sleeve (Q) to provide said coupling by means of electric sleeve welding with the end of the bar. Specifically, in the case where the mouth (B) is to be inserted into the sleeve (Q), it should have a length such to be properly inserted into said sleeve (Q).

Preferably, the bars (1, 2, 3, 6, 7) are tubular, whereas the connectors (4, 5, 8) are internally hollow. Such a provision significantly reduces the total weight of the submarine support frame (100).

For illustrative purposes, Fig. 4 shows a possible connection mode of the sea electrode (E) to the submarine support frame (100), wherein connection is made by means of connecting means. Said connecting means comprise pipes (N) connected to the upper bars (1) and to the upper connectors (4), as well as conventional fixing means (not shown in the attached figures) for fixing the sea electrode (E) to the pipes (N).

The pipes (N) are connected to the upper bars (1) and to the upper connectors (4) by means of fixing kits (S) attached to the upper bars (1) and to the upper connectors (4) by means of brackets and bolts made of Nylon GF30 (as shown in Fig. 5), and inferiorly provided with eyelets for the insertion of said pipes (N).

The brackets of the fixing kits (S) are provided with fixing portions consisting of two arms disposed one above the other, between which a section of one of said protection panels (PP) is inserted. The fixing of said protection panel (PP) to the arms of the bracket of the fixing kit (S) is done by means of a fixing bolt made of Nylon GF30, as shown in Fig. 5.

Following the above description, the advantages of the present invention are evident, since it provides for using said submarine support frame (100) composed of structural elements made of high-density polyethylene as support for the sea electrode (E).

Firstly, the submarine support frame (100) composed of the structural elements (bars and connectors) made of high-density polyethylene has an excellent chemical resistance to electrolytic degradation.

Furthermore, the polyethylene structural elements (bars and connectors) can be easily found on the market, greatly reducing the costs required to build the submarine support frame (100).

Additionally, since the connection of the bars to the connectors is done by means of the traditional welding methods used for plastic materials, the fabrication of the submarine support frame can be carried out by suitably trained workers, without requiring any special training or manual dexterity, thus evidently saving on time and increasing quality assurance, even for emergency interventions in case of failures.

Finally, it is worth pointing out that high-density polyethylene has viscoelastic characteristics that give elasticity and ductility to the submarine support frame (100) with obvious advantages in the event of accidental impacts by boats or vessels both during the installation and the operation.

Numerous variations and modifications may be made to the present embodiment of the invention, which are within the scope of an expert of the field, while still falling within the scope of the invention as expressed in the appended claims.

## Claims

1. Submarine support frame (100) for supporting a sea electrode (E); said submarine support frame (100) comprising a reticular structure (101) comprising bars (1, 2, 3) and connectors (4, 5) for connecting the bars (1, 2, 3) to each other; said reticular structure (101) defining a housing (A),
wherein
said reticular structure (101) of the submarine support frame is configured to act as support and protection for the sea electrode (E) when the sea electrode (E) is arranged into the housing (A) of the reticular structure; and
said bars (1, 2, 3) and said connectors (4, 5) of the reticular structure are made of polyethylene.

2. The submarine support frame (100) according to claim 1, wherein said bars (1, 2, 3) and said connectors (4, 5) are made of high-density polyethylene.

3. The submarine support frame (100) according to claim 1 or 2, wherein said reticular structure (101) comprises:
- a plurality of upper bars (1) lying on an upper horizontal plane;
- a plurality of upper connectors (4) connecting the upper bars (1) to each other;
- a plurality of lower bars (2) lying on a lower horizontal plane;
- a plurality of lower connectors (5) connecting the lower bars (2) to each other;
- a plurality of uprights (3), each one of them being connected to an upper connector (4) and to a lower connector (5) aligned and disposed one above the other.

4. The submarine support frame (100) according to any one of the preceding claims, comprising an additional structure (102) connected superiorly to the reticular structure (101) and comprising bars (6, 7) and connectors (8) connecting said bars; wherein said bars (6, 7) and connectors (8) of the additional structure (102) are made of high-density polyethylene.

5. The submarine support frame (100) according to any one of the preceding claims, wherein each bar (1, 2, 3, 6, 7) has two ends (T1, T2); each end (T1, T2) is connected to a connector (4, 5, 8) by means of welding.

6. The submarine support frame (100) according to any one of the preceding claims, wherein each connector (4, 5, 8) has at least three insertion mouths (B); wherein an end (T1, T2) of one of the bars is connected to at least one of said three insertion mouths (B).

7. The submarine support frame (100) according to any one of the preceding claims, wherein each connector (4, 5, 8) has six insertion mouths (B) aligned two by two along three orthogonal axes; wherein an end (T1, T2) of one of the bars is connected to at least one of said insertion mouths (B).

8. The submarine support frame (100) according to any one of the preceding claims, wherein said bars are tubular and said connectors are internally hollow.

9. The submarine support frame (100) according to any one of the preceding claims, wherein said upper bars (1) are arranged along rows (R) and columns (C) orthogonal to each other in such a manner as to define a grid; wherein said lower bars (2) are arranged along the perimeter of the reticular structure (101) in such a manner as to define an opening for access to the housing (A).

10. Assembly (G) composing a sea electrode (E) and a submarine support frame (100) according to any one of the preceding claims.

11. Use of a submarine support frame (100) according to anyone of the claims 1 to 9 to support a sea electrode (E).
